(19) Europäisches Patentamt
European Patent Office
Office européen des brevets

(11) **EP 2 977 869 A1**

(12) **EUROPEAN PATENT APPLICATION**
published in accordance with Art. 153(4) EPC

(43) Date of publication:
**27.01.2016 Bulletin 2016/04**

(51) Int Cl.:
**G06F 3/042** *(2006.01)*    **G02B 6/122** *(2006.01)*
**G02B 26/02** *(2006.01)*

(21) Application number: **14793998.7**

(22) Date of filing: **07.03.2014**

(86) International application number:
**PCT/JP2014/055894**

(87) International publication number:
**WO 2014/181574 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.05.2013   JP 2013100053**

(71) Applicant: **Nitto Denko Corporation**
**Ibaraki-shi, Osaka 567-8680 (JP)**

(72) Inventors:
• **SHIMIZU Yusuke**
  **Ibaraki-shi**
  **Osaka 567-8680 (JP)**
• **YOSHIOKA Ryoma**
  **Ibaraki-shi**
  **Osaka 567-8680 (JP)**

(74) Representative: **Hoffmann Eitle**
**Patent- und Rechtsanwälte PartmbB**
**Arabellastraße 30**
**81925 München (DE)**

(54)    **INFORMATION DISPLAY DEVICE**

(57)    There is provided an information display device which allows a user to perform an input operation with an input element such as a typical writing implement and which is capable of specifying and detecting a tip input part of the input element even when the tip input part of the input element and the little finger of a hand which holds the input element, the base of the little finger or the like are at the same time in contact with a display of the information display device during the input operation. This information display device includes an information display element P having a display D, and an optical waveguide W in a sheet form affixed to a surface of the display D and constituting a position sensor A. The optical waveguide W is configured such that linear cores 2 in a lattice form are held between an under cladding layer and an over cladding layer 3 both in a sheet form. The cores 2 have an elasticity modulus higher than that of the under cladding layer and that of the over cladding layer 3. Thus, the deformation rate of a cross section of the cores 2 as seen in a pressed direction is lower than the deformation rates of cross sections of the over cladding layer 3 and the under cladding layer when a surface of the optical waveguide W is pressed with an input element 10 such as a writing implement.

FIG. 1

EP 2 977 869 A1

**Description**

TECHNICAL FIELD

The present invention relates to an information display device capable of displaying notes and the like as digital data (electronic data) on a display at the same time that the notes and the like are written on the display.

BACKGROUND ART

There are some notepad tools, such as electronic note processors, which digitally process notes and the like (see PTL 1, for example). Such an electronic note processor includes a display for displaying inputted notes and the like, and is configured to allow a user to input notes and the like into the display with a purpose-built stylus. Specifically, the aforementioned display serves as a touch panel which detects the tip of the purpose-built stylus. By bringing the tip of the purpose-built stylus into contact with the display and then moving the purpose-built stylus, the movement locus of the tip of the purpose-built stylus is converted into electronic data as notes and the like, which in turn are inputted to the display to appear on the display.

Also, tablet-type devices, smartphones and the like include displays and are configured to allow a user to perform an input operation with a finger tip, rather than the purpose-built stylus. Specifically, the display of each of the tablet-type devices and the like serves as a touch panel which senses a weak current (a change in capacitance of a human body) generated when touched with a finger tip. By bringing the finger tip into contact with the display and then moving the finger tip, the movement locus of the finger tip is converted into electronic data as notes and the like, which in turn are inputted to the display to appear on the display.

RELATED ART DOCUMENT

PATENT DOCUMENTS

PTL 1: JP-B-3746378

SUMMARY OF INVENTION

It is, however, impossible to input information to the aforementioned display with a typical writing implement such as a pen which dispenses ink, a mere elongated rod-shaped object which dispenses no ink and the like.

When two or more parts (for example, a finger tip and a hand) of a human body are at the same time in contact with the aforementioned display of the type to which information is inputted with a finger tip, it is impossible to specify the contacting parts, so that a proper input operation is not achieved.

In view of the foregoing, it is therefore an object of the present invention to provide an information display device which allows a user to perform an input operation with an input element such as a typical writing implement and which is capable of specifying and detecting a tip input part of the input element even when the tip input part of the input element and the little finger of a hand which holds the input element, the base of the little finger or the like are at the same time in contact with a display of the information display device during the input operation.

To accomplish the aforementioned object, an information display device comprises a display for displaying information and a position sensor, wherein an optical waveguide of the position sensor is placed on a surface of the display, and wherein an inputted information, which is a movement locus of a tip input part on a surface of the optical waveguide, appears on the display. The position sensor includes the optical waveguide in a sheet form including an under cladding layer in a sheet form, a plurality of linear cores arranged in a lattice form and formed on a surface of the under cladding layer, and an over cladding layer in a sheet form formed to cover the cores; a light-emitting element connected to one end surface of the cores; a light-receiving element connected to the other end surface of the cores; and a specifying means for specifying the movement locus of the tip input part of the input element on the surface of the optical waveguide, based on the amount of light propagation in the cores which is changed by the movement of the tip input part, wherein the cores have an elasticity modulus higher than that of the under cladding layer and that of the over cladding layer; and wherein the deformation rate of a cross section of the cores as seen in a pressed direction is lower than the deformation rates of cross sections of the over cladding layer and the under cladding layer when the surface of the optical waveguide in the sheet form is pressed with the tip input part.

The term "deformation rate" as used in the present invention refers to the proportion of the amount of change in the thickness of the cores, the over cladding layer and the under cladding layer as seen in the pressed direction during the pressing to the thickness thereof before the pressing. The "movement" of the pen tip includes the movement thereof through a distance of 0 (zero), in which case the "movement locus" is a point.

In the information display device according to the present invention, the position sensor including the optical waveguide in the sheet form including the linear cores arranged in the lattice form is used as a means for detecting the movement locus of the tip input part (such as a pen tip) of the input element (such as a pen). That is, the movement locus of the pen tip on the surface of the optical waveguide is specified by the amount of light propagation in the cores which is changed by the movement of the pen tip. Thus, no purpose-built stylus is required for input operation. Also, a typical writing implement such as a pen which dispenses ink, a mere elongated rod-shaped object which dispenses no ink and the like may be used as the input element. In the optical waveguide, the elasticity modulus of the cores is higher than that of the under cladding layer and that of the over cladding layer. Thus, when the surface of the over cladding layer of the optical waveguide is pressed, the deformation rate of the cross section of the cores as seen in the pressed direction is lower than the deformation rates of the cross sections of the over cladding layer and the under cladding layer. The cross-sectional area of the cores as seen in the pressed direction is held. When information such as a character is inputted by moving the tip input part of the input element on the surface of the optical waveguide, the bend in the cores is sharp along the tip input part of the input element in the part pressed with the tip input part to cause light leakage (scattering) from the cores, whereas the bend in the cores is gentle along the hand in the part pressed with part of the hand holding the input element to prevent the occurrence of the aforementioned light leakage (scattering). Thus, the level of light received (the amount of light received) by the light-receiving element is decreased in the cores pressed with the tip input part such as a pen tip, but is prevented from decreasing in the cores pressed with part of the hand holding the input element. As a result, the movement locus specifying means is capable of sensing the position (coordinates) of the tip input part such as a pen tip, based on the decrease in the level of received light, and not sensing the part pressed with the hand in which the level of received light does not decrease because it is in the same state as an unpressed part. Thus, the information display device according to the present invention is capable of sensing only the movement locus of the tip input part such as a pen (information such as an inputted character) to display the movement locus on the display.

## BRIEF DESCRIPTION OF DRAWINGS

[FIG. 1] FIG. 1 is a view schematically illustrating one embodiment of an information display device according to the present invention.
[FIG. 2] FIG. 2A is a plan view schematically showing a position sensor constituting the information display device, and FIG. 2B is an enlarged sectional view thereof.
[FIG. 3] FIG. 3A is a sectional view schematically showing an optical waveguide in the position sensor which is pressed with an input element, and FIG. 3B is a sectional view schematically showing the optical waveguide pressed with a hand.

## DESCRIPTION OF EMBODIMENTS

Next, an embodiment according to the present invention will now be described in detail with reference to the drawings.

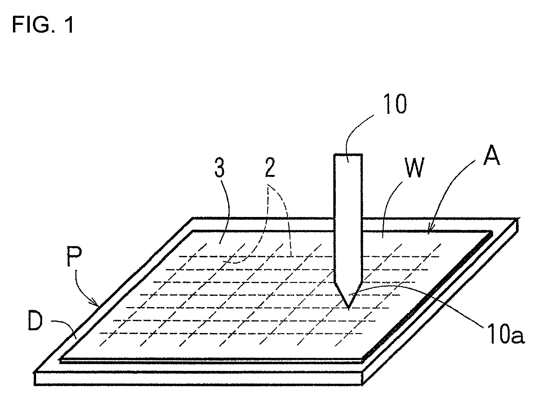

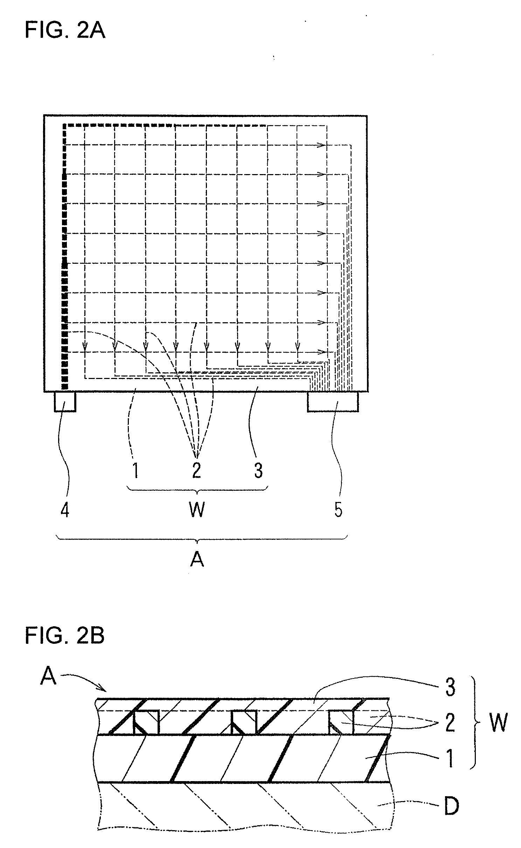

FIG. 1 shows one embodiment of an information display device according to the present invention. The information display device according to this embodiment includes an information display element P having a rectangular display D, and an optical waveguide W in a rectangular sheet form affixed to a surface of the display D. As shown in plan view in FIG. 2A and in enlarged sectional view of a middle portion thereof in FIG. 2B, this optical waveguide W is configured such that linear cores 2 arranged in a lattice form are held between an under cladding layer 1 and an over cladding layer 3 both in a rectangular sheet form, and the under cladding layer 1 is in contact with the surface of the display D. As schematically shown in FIG. 2A, a light-emitting element 4 is connected to one end surface of the linear cores 2 arranged in the lattice form, and a light-receiving element 5 is connected to the other end surface of the linear cores 2. Light emitted from the light-emitting element 4 passes through the cores 2 and is received by the light-receiving element 5. The light-emitting element 4 and the light-receiving element 5 are controlled by a CPU (central processing unit) (not shown). The CPU, together with the light-emitting element 4 and the light-receiving element 5, is mounted on a circuit board (not shown). In this embodiment, the circuit board with the CPU mounted thereon is disposed inside the information display element P (with reference to FIG. 1). For this reason, the CPU, the light-emitting element 4, the light-receiving element 5 and the circuit board are not shown in FIG. 1.
In the optical waveguide W, the cores 2 have an elasticity modulus higher than the elasticity modulus of the under cladding layer 1 and the elasticity modulus of the over cladding layer 3. Thus, when a surface of the optical waveguide W is pressed, the deformation rate of a cross section of the cores 2 as seen in a pressed direction is lower than the deformation rates of cross sections of the over cladding layer 3 and the under cladding layer 1.

The information display element P is a computer or the like having the display D including a liquid crystal display, an organic EL display and the like for information display, such as a tablet-type device, a smartphone and a notebook-sized personal computer.

In FIG. 2A, the cores 2 are indicated by broken lines, and the thickness of the broken lines indicates the thickness of the cores 2. Also, in FIG. 2A, the number of cores 2 are shown as abbreviated. Arrows in FIG. 2A indicate the directions in which light travels. In this embodiment, a power supply provided in the information display element P is used as a power supply required for the light-emitting element 4, the CPU and the like.

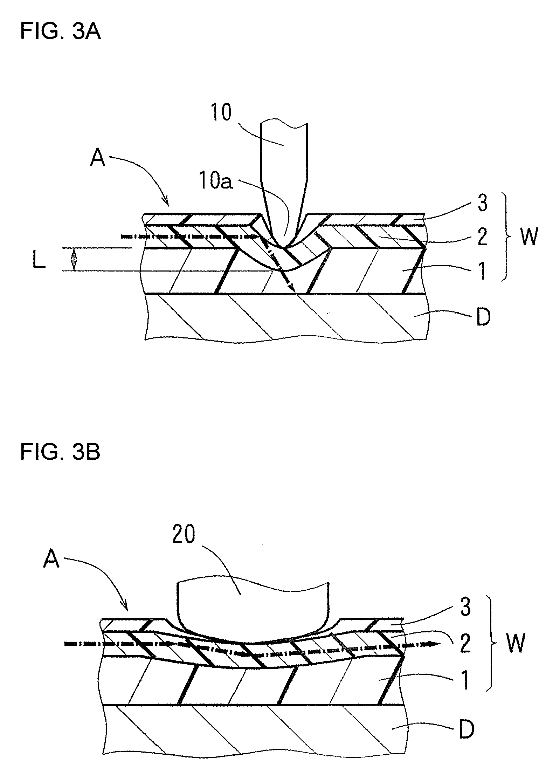

In the information display device having such a configuration, part of the optical waveguide W corresponding to the linear cores 2 arranged in the lattice form serves as an input region. The input of information into the optical waveguide W with an input element 10 (with reference to FIG. 1) such as a pen is done by moving a tip input part (such as a pen tip) 10a (with reference to FIG. 1) of the input element 10 on a surface of the over cladding layer 3 in such a manner as to write a character and the like on the surface of the over cladding layer 3 in the input region. Specifically, as shown in sectional views in FIGS. 3A and 3B, when information such as a character is inputted, for example, by writing onto the surface of the over cladding layer 3 of the optical waveguide W with the input element 10 such as a pen held in a hand 20, part of the optical waveguide W which is pressed with the tip input part 10a such as a pen tip (with reference to FIG. 3A) and part of the optical waveguide W which is pressed with the little finger of the hand 20 or the base thereof (hypothenar) (with reference to FIG. 3B) are deformed in cross sections as seen in the pressed direction in such a manner that the over cladding layer 3 and the under cladding layer 1 which have a lower elasticity modulus are crushed, and that the cores 2 having a higher elasticity modulus are bent along the parts of the tip input part 10a and the hand 20 so as to sink in the under cladding layer 1 while holding the cross-sectional area thereof.

In the part pressed with the tip input part 10a, the cores 2 are bent sharply, as shown in FIG. 3A, because the tip input part 10a is sharp-pointed, so that light leakage (scattering) from the cores 2 occurs (with reference to dash-double-dot arrows in FIG. 3A). In the part pressed with the hand 20 holding the input element 10, on the other hand, the cores 2 are bent gently, as shown in FIG. 3B, because the hand 20 is considerably larger and rounder than the tip input part 10a, so that the aforementioned light leakage (scattering) does not occur (light travels in the cores 2 without leaking from the cores 2) (with reference to dash-double-dot arrows in FIG. 3B). Thus, the level of light received by the light-receiving element 5 is decreased in the cores 2 pressed with the tip input part 10a, but is prevented from decreasing in the cores 2 pressed with the hand 20 holding the input element 10. The position (coordinates) of the tip input part 10a is sensed based on the decrease in the level of received light. The part pressed with the hand 20 in which the level of received light does not decrease is in the same state as an unpressed part, and is not sensed.

The CPU is programmed to specify a continuous position corresponding to electric signals, which is outputted from the light-receiving element 5, based on the decrease in the level of light received by the light-receiving element 5, and display it as the movement locus of the tip input part 10a. That is, a combination of the optical waveguide W, the CPU, the light-emitting element 4 and the light-receiving element 5 (with reference to FIGS. 2A and 2B) serves as a position sensor for sensing the position of the tip input part (such as a pen tip) 10a of the input element (such as a pen) 10 for use in inputting information. Data representing the movement locus of the tip input part 10a of the input element 10 is outputted to the CPU (not shown) of the information display element P, and subjected to an imaging process properly in the CPU of the information display element P, so that the aforementioned movement locus appears on the display D.

In the information display device, the optical waveguide W in the sheet form including the linear cores 2 arranged in the lattice form is thus used as a means for sensing the movement locus of the tip input part (such as a pen tip) 10a of the input element (such as a pen) 10. For this reason, no purpose-built stylus is required for input operation. Also, a typical writing implement such as a pen which dispenses ink, a mere elongated rod-shaped object which dispenses no ink and the like may be used as the input element 10.

In the optical waveguide W, the elasticity modulus of the cores 2 is higher than the elasticity modulus of the under cladding layer 1 and the elasticity modulus of the over cladding layer 3. Thus, when the optical waveguide W is pressed with the hand 20 holding the input element 10, only the position of the tip input part 10a is sensed but the part pressed with the hand 20 is not sensed in the aforementioned manner.

Further, part of the optical waveguide W pressed with the tip input part 10a of the input element 10 is deformed as described above during the operation of inputting to the optical waveguide W. This allows a user to feel like as if he/she is writing on paper during the input operation, thereby giving a good touch when he/she is writing.

Also, the information display element P such as the tablet-type device generally previously includes an information storage medium such as a memory. Thus, inputted information (information appearing on the display D) may be stored in the information storage medium.

When the pressing with the tip input part 10a of the input element 10 is released (the tip input part 10a is moved away or the input such as writing is completed), the under cladding layer 1, the cores 2 and the over cladding layer 3 return to their original states (with reference to FIG. 2B) because of their restoring forces. It is preferable that the sinking depth L of the cores 2 in the under cladding layer 1 is a maximum of 2000 $\mu$m. When the sinking depth L exceeds 2000

μm, there are dangers that the under cladding layer 1, the cores 2 and the over cladding layer 3 do not return to their original states and that cracking occurs in the optical waveguide W.

The elasticity moduli and the like of the cores 2, the under cladding layer 1 and the over cladding layer 3 will be described in further detail.

The elasticity modulus of the cores 2 is preferably in the range of 1 to 10 GPa, and more preferably in the range of 2 to 5 GPa. When the elasticity modulus of the cores 2 is too low, the cross-sectional area of the cores 2 tends not to be held (the cores 2 tend to be crushed) because of the pressure of the tip input part 10a, depending on the shape of the tip input part 10a such as a pen tip. In such a case, there is a danger that the position of the tip input part 10a is not properly sensed. On the other hand, when the elasticity modulus of the cores 2 is too high, the bend in the cores 2 because of the pressure of the tip input part 10a tends to become a gentle bend, rather than a sharp bend along the tip input part 10a. This causes no light leakage (scattering) from the cores 2, so that the level of light received by the light-receiving element 5 is not decreased. In such a case, there is a danger that the position of the tip input part 10a is not properly sensed. The cores 2 have the following dimensions: a thickness in the range of 5 to 100 μm, and a width in the range of 5 to 500 μm, for example.

The elasticity modulus of the over cladding layer 3 is preferably in the range of 0.1 MPa to less than 10 GPa, and more preferably in the range of 1 MPa to less than 5 GPa. When the elasticity modulus of the over cladding layer 3 is too low, the over cladding layer 3 tends to be so soft as to be damaged by the pressure of the tip input part 10a, depending on the shape of the tip input part 10a such as a pen tip. In such a case, it is impossible for the over cladding layer 3 to protect the cores 2. On the other hand, when the elasticity modulus of the over cladding layer 3 is too high, the over cladding layer 3 tends not to be deformed by the pressures of the tip input part 10a and the hand 20 in such a manner as to be crushed but the cores 2 are crushed, resulting in a danger that the position of the tip input part 10a is not properly sensed. The over cladding layer 3 has a thickness in the range of 1 to 200 μm, for example.

The elasticity modulus of the under cladding layer 1 is preferably in the range of 0.1 MPa to 1 GPa, and more preferably in the range of 1 to 100 MPa. When the elasticity modulus of the under cladding layer 1 is too low, the under cladding layer 1 is excessively soft, so that it is difficult for the under cladding layer 1 to return to its original state after being pressed with the tip input part 10a such as a pen tip. As a result, it tends to be impossible to continuously perform the pressing. On the other hand, when the elasticity modulus of the under cladding layer 1 is too high, the under cladding layer 1 tends not to be deformed by the pressures of the tip input part 10a and the hand 20 in such a manner as to be crushed but the cores 2 are crushed, resulting in a danger that the position of the tip input part 10a is not properly sensed. The under cladding layer 1 has a thickness in the range of 20 to 2000 μm, for example.

Examples of the materials for the formation of the cores 2, the under cladding layer 1 and the over cladding layer 3 include photosensitive resins and thermosetting resins having transparency to light because of the need for a user to view information appearing on the display D through the optical waveguide W. The optical waveguide W may be produced by a manufacturing method depending on the materials. The cores 2 have a refractive index higher than the refractive indices of the under cladding layer 1 and the over cladding layer 3. The adjustment of the elasticity moduli and the refractive indices may be made, for example, by adjusting the selection of the types of the materials for the formation of the cores 2, the under cladding layer 1 and the over cladding layer 3, and the composition ratio thereof. An elastic sheet having transparency to light may be used as the under cladding layer 1, and the cores 2 may be formed in a lattice form on the elastic sheet.

Also, an elastic layer having transparency to light may be provided on the back surface of the under cladding layer 1. In this case, when the restoring forces of the under cladding layer 1, the cores 2 and the over cladding layer 3 are weakened or when the under cladding layer 1, the cores 2 and the over cladding layer 3 are originally made of materials having weak restoring forces, the elastic force of the elastic layer may be used to assist the weak restoring forces, thereby allowing the under cladding layer 1, the cores 2 and the over cladding layer 3 to return to their original states after the pressing with the tip input part 10a of the input element 10 is released.

The amount of light leakage (scattering) due to the sharp bend of the cores 2 in the part pressed with the tip input part 10a is important for the purposes of detecting only the position of the tip input part 10a such as a pen tip and not detecting the hand 20 holding the input element 10 such as a pen as mentioned above. A refractive index difference between the cores 2 and the under cladding layer 1 and a refractive index difference between the cores 2 and the over cladding layer 3 are defined, for example, using the ratio S (= R/T) between the radius of curvature R (in μm) of the tip input part 10a such as a pen tip and the thickness T (in μm) of the cores 2. Then, the maximum value Δmax of the refractive index difference is expressed as in Equation (1) below. When the refractive index difference is greater than the maximum value Δmax, the amount of light leakage (scattering) is small even in the case where the surface of the optical waveguide W is pressed with the tip input part 10a, so that the level of light received by the light-receiving element 5 is not sufficiently decreased. This makes it difficult to distinguish between the position of the tip input part 10a and the position of the hand 20.

[MATH. 1]

$$\Delta max = 8.0 \times 10^{-2} - S \times (5.0 \times 10^{-4}) \qquad (1)$$

On the other hand, the minimum value $\Delta min$ of the refractive index difference is expressed as in Equation (2) below. When the refractive index difference is less than the minimum value $\Delta min$, the light leakage (scattering) occurs also in the part pressed with the hand 20. This makes it difficult to distinguish between the position of the tip input part 10a and the position of the hand 20.

[MATH. 2]

$$\Delta min = 1.1 \times 10^{-2} - S \times (1.0 \times 10^{-4}) \qquad (2)$$

It is therefore preferable that the refractive index differences range between the minimum value $\Delta min$ and the maximum value $\Delta max$. For example, the refractive index difference is in the range of $1.0 \times 10^{-3}$ to $7.95 \times 10^{-2}$, when the radius of curvature R (in $\mu m$) of the tip input part 10a is in the range of 100 to 1000, the thickness T (in $\mu m$) of the cores 2 is in the range of 10 to 100, and the ratio S is in the range of 1 to 100. When the ratio S is greater than 100, the minimum value $\Delta min$ shall be $1.0 \times 10^{-3}$ (constant).

The CPU, the light-emitting element 4, the light-receiving element 5 and the circuit board are disposed inside the information display element P in the aforementioned embodiment. However, all or at least one of the CPU, the light-emitting element 4, the light-receiving element 5 and the circuit board may be disposed outside the information display element P.

Next, an inventive example of the present invention will be described in conjunction with a comparative example. It should be noted that the present invention is not limited to the inventive example.

EXAMPLES

[Material for Formation of Over Cladding Layer]

    Component a: 30 parts by weight of an epoxy resin (EPOGOSEY PT available from Yokkaichi Chemical Company Limited).
    Component b: 70 parts by weight of an epoxy resin (EHPE3150 available from Daicel Corporation).
    Component c: 4 parts by weight of a photo-acid generator (CPI-200K available from San-Apro Ltd.).
    Component d: 100 parts by weight of ethyl lactate (available from Wako Pure Chemical Industries, Ltd.).

A material for the formation of an over cladding layer was prepared by mixing these components a to d together.

[Material for Formation of Cores]

    Component e: 80 parts by weight of an epoxy resin (EHPE3150 available from Daicel Corporation).
    Component f: 20 parts by weight of an epoxy resin (YDCN-700-10 available from Nippon Steel & Sumikin Chemical Co., Ltd.).
    Component g: 1 part by weight of a photo-acid generator (SP170 available from ADEKA Corporation).
    Component h: 50 parts by weight of ethyl lactate (available from Wako Pure Chemical Industries, Ltd.).

A material for the formation of cores was prepared by mixing these components e to h together.

[Material for Formation of Under Cladding Layer]

    Component i: 75 parts by weight of an epoxy resin (EPOGOSEY PT available from Yokkaichi Chemical Company Limited).
    Component j : 25 parts by weight of an epoxy resin (JER1007 available from Mitsubishi Chemical Corporation).

Component k: 4 parts by weight of a photo-acid generator (CPI-200K available from San-Apro Ltd.).
Component 1: 50 parts by weight of ethyl lactate (available from Wako Pure Chemical Industries, Ltd.).

A material for the formation of an under cladding layer was prepared by mixing these components i to 1 together.

[Production of Optical Waveguide]

The over cladding layer was formed on a surface of a base material made of glass by a spin coating method with the use of the aforementioned material for the formation of the over cladding layer. The over cladding layer had a thickness of 5 μm, an elasticity modulus of 1.2 GPa, and a refractive index of 1.503.

Next, the cores were formed on a surface of the over cladding layer by a photolithographic method with the use of the aforementioned material for the formation of the cores. The cores had a thickness of 30 μm, a width of 100 μm in a portion of a lattice form, a spacing of 600 μm, an elasticity modulus of 3 GPa, and a refractive index of 1.523.

Next, the under cladding layer was formed on the surface of the over cladding layer by a spin coating method with the use of the aforementioned material for the formation of the under cladding layer so as to cover the cores. The under cladding layer had a thickness of 200 μm (as measured from the surface of the over cladding layer), an elasticity modulus of 3 MPa, and a refractive index of 1.503.

Then, a substrate made of PET (having a thickness of 1 mm) with a double-sided adhesive tape (having a thickness of 25 μm) affixed to one surface thereof was prepared. Next, the other adhesive surface of the double-sided adhesive tape was affixed to a surface of the under cladding layer. In that state, the over cladding layer was stripped from the base material made of glass.

[Comparative Example]

[Material for Formation of Over Cladding Layer]

Component m: 40 parts by weight of an epoxy resin (EPOGOSEY PT available from Yokkaichi Chemical Company Limited).
Component n: 60 parts by weight of an epoxy resin (2021P available from Daicel Corporation).
Component o: 4 parts by weight of a photo-acid generator (SP170 available from ADEKA Corporation).

A material for the formation of an over cladding layer was prepared by mixing these components m to o together.

[Material for Formation of Cores]

Component p: 30 parts by weight of an epoxy resin (EPOGOSEY PT available from Yokkaichi Chemical Company Limited).
Component q: 70 parts by weight of an epoxy resin (EXA-4816 available from DIC Corporation).
Component r: 4 parts by weight of a photo-acid generator (SP170 available from ADEKA Corporation).

A material for the formation of cores was prepared by mixing these components p to r together.

[Material for Formation of Under Cladding Layer]

Component s: 40 parts by weight of an epoxy resin (EPOGOSEY PT available from Yokkaichi Chemical Company Limited).
Component t: 60 parts by weight of an epoxy resin (2021P available from Daicel Corporation).
Component u: 4 parts by weight of a photo-acid generator (SP170 available from ADEKA Corporation).

A material for the formation of an under cladding layer was prepared by mixing these components s to u together.

[Production of Optical Waveguide]

An optical waveguide having the same dimensions was produced in the same manner as in Inventive Example.

However, the over cladding layer had an elasticity modulus of 1 GPa, the cores had an elasticity modulus of 25 MPa, and the under cladding layer had an elasticity modulus of 1 GPa. Also, the over cladding layer had a refractive index of 1.504, the cores had a refractive index of 1.532, and the under cladding layer had a refractive index of 1.504.

[Production of Position Sensor]

A light-emitting element (XH85-S0603-2s available from Optowell Co., Ltd.) was connected to one end surface of the cores of each of the optical waveguides in Inventive and Comparative Examples, and a light-receiving element (s10226 available from Hamamatsu Photonics K.K.) was connected to the other end surface of the cores thereof. Then, a circuit was provided on which the light-emitting element, the light-receiving element, a CPU (dsPIC33FJ128MC706 available from Microchip Technology Inc.) for controlling these elements were mounted. Thus, a position sensor in each of Inventive and Comparative Examples was produced.

[Production of Information Display Device]

A tablet-type device (ICONIA TAB W500 available from Acer Incorporated) was prepared, and the optical waveguide of the position sensor was affixed to a surface of a display of the tablet-type device. At this time, the under cladding layer was brought into contact with the surface of the display. The circuit on which the CPU and the like were mounted in the position sensor was disposed inside the tablet-type device, and a power supply provided in the tablet-type device was used as a power supply required for the circuit. In this manner, the position sensor was made available. The display of the tablet-type device includes a sensor for sensing a change in capacitance of a human body, but the supply of power to the sensor was shut off so that the sensor did not operate.

[Operation Check of Information Display Device]

An inputter held a ballpoint pen (with a pen tip having a radius of curvature of 350 $\mu$m) in his/her hand, and inputted a character into an input region of the optical waveguide.
As a result, only the inputted character was displayed on the display in the information display device including the optical waveguide in Inventive Example. On the other hand, not only the inputted character but also the part pressed with the hand holding the ballpoint pen was displayed on the display in the information display device including the optical waveguide in Comparative Example.
Results similar to those described above were obtained when a mere rod or stick (with a tip having a radius of curvature of 550 $\mu$m) was used in place of the aforementioned ballpoint pen to perform an input operation in the same manner as described above.
These results show that the position sensor in Inventive Example is capable of sensing only inputted information and not sensing unwanted information even when the input element is replaced.
Although specific forms in the present invention have been described in the aforementioned example, the aforementioned example should be considered as merely illustrative and not restrictive. It is contemplated that various modifications evident to those skilled in the art could be made without departing from the scope of the present invention.
The information display device according to the present invention is applicable to causing information inputted onto a display with a typical writing implement and the like to appear on the display.

REFERENCE SIGNS LIST

A    Position sensor
D    Display
P    Information display element
W    Optical waveguide
2    Cores
3    Over cladding layer
10    Input element

**Claims**

**1.** An information display device comprising:

a display for displaying information, and
a position sensor including:

an optical waveguide in a sheet form including an under cladding layer in a sheet form, a plurality of linear cores arranged in a lattice form and formed on a surface of the under cladding layer, and an over cladding layer in a sheet form formed to cover the cores;
a light-emitting element connected to one end surface of the cores;
a light-receiving element connected to the other end surface of the cores; and
a movement locus specifying means for specifying a movement locus of a tip input part of an input element on a surface of the optical waveguide, based on an amount of light propagation in the cores which is changed by movement of the tip input part;
wherein the cores have an elasticity modulus higher than that of the under cladding layer and that of the over cladding layer;
wherein the deformation rate of a cross section of the cores as seen in a pressed direction is lower than the deformation rates of cross sections of the over cladding layer and the under cladding layer when the surface of the optical waveguide in the sheet form is pressed with the tip input part,
wherein the optical waveguide of the position sensor is placed on the surface of the display, and
wherein the movement locus of the tip input part on the surface of the optical waveguide serves as inputted information and is displayed on the display.

FIG. 1

## FIG. 2A

## FIG. 2B

FIG. 3A

FIG. 3B

## INTERNATIONAL SEARCH REPORT

| International application No. |
| --- |
| PCT/JP2014/055894 |

A. CLASSIFICATION OF SUBJECT MATTER

*G06F3/042*(2006.01)i, *G02B6/122*(2006.01)i, *G02B26/02*(2006.01)i

According to International Patent Classification (IPC) or to both national classification and IPC

B. FIELDS SEARCHED

Minimum documentation searched (classification system followed by classification symbols)
G06F3/042, G02B6/122, G02B26/02

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho  1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 1-172916 A   (NOK Corp.),<br>07 July 1989 (07.07.1989),<br>entire text; all drawings<br>(Family: none) | 1 |
| A | JP 3-256111 A   (Fujitsu Ltd.),<br>14 November 1991 (14.11.1991),<br>entire text; all drawings<br>(Family: none) | 1 |
| A | JP 2001-222378 A   (NEC Saitama, Ltd.),<br>17 August 2001 (17.08.2001),<br>entire text; all drawings<br>& US 2001/0013861 A1     & EP 1126406 A2<br>& AU 1839101 A            & AU 784145 B<br>& CN 1308352 A | 1 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    28 May, 2014 (28.05.14) | Date of mailing of the international search report<br>    10 June, 2014 (10.06.14) |
| --- | --- |
| Name and mailing address of the ISA/<br>    Japanese Patent Office | Authorized officer |
| Facsimile No. | Telephone No. |

**INTERNATIONAL SEARCH REPORT**

| International application No. |
| --- |
| PCT/JP2014/055894 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 10-49285 A  (Hitachi, Ltd.), 20 February 1998 (20.02.1998), entire text; all drawings (Family: none) | 1 |

Form PCT/ISA/210 (continuation of second sheet) (July 2009)

**EP 2 977 869 A1**

**Patent documents cited in the description**

- JP 3746378 B